(19) Europäisches Patentamt

European Patent Office

Office européen des brevets

(11) **EP 2 319 217 B1**

(12) **EUROPEAN PATENT SPECIFICATION**

(45) Date of publication and mention
of the grant of the patent:
**15.02.2012 Bulletin 2012/07**

(21) Application number: **09786066.2**

(22) Date of filing: **24.07.2009**

(51) Int Cl.:
*H04L 25/02* (2006.01)   *H04L 27/26* (2006.01)
*H04L 5/00* (2006.01)   *H04L 1/06* (2006.01)
*H04L 1/00* (2006.01)

(86) International application number:
**PCT/IB2009/006360**

(87) International publication number:
**WO 2010/013111 (04.02.2010 Gazette 2010/05)**

(54) **METHOD AND APPARATUS FOR RECEIVING NUMERICAL SIGNALS TRANSMITTED BY CODED FREQUENCY DIVISION MULTIPLEXING FOR TRANSMISSION SYSTEMS, IN PARTICULAR OF THE SPATIAL DIVERSITY TYPE**

VERFAHREN UND VORRICHTUNG ZUM EMPFANGEN VON DURCH CODIERTES FREQUENZMULTIPLEXEN GESENDETEN NUMERISCHEN SIGNALEN FÜR ÜBERTRAGUNGSSYSTEM INSBESONDERE DES RAUMDIVERSITÄTSTYPS

PROCÉDÉ ET APPAREIL POUR LA RÉCEPTION DE SIGNAUX NUMÉRIQUES TRANSMIS PAR MULTIPLEXAGE EN FRÉQUENCES CODÉES POUR SYSTÈMES DE TRANSMISSION, EN PARTICULIER DE TYPE À DIVERSITÉ SPATIALE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.07.2008 IT TO20080588**

(43) Date of publication of application:
**11.05.2011 Bulletin 2011/19**

(73) Proprietor: **Rai Radiotelevisione Italiana S.P.A.**
**00195 Roma (RM) (IT)**

(72) Inventors:
• **MIGNONE, Vittoria**
**I-10040 Piobesi Torinese (TO) (IT)**
• **MORELLO, Alberto**
**I-10126 Torino (IT)**

(74) Representative: **Camolese, Marco et al**
**Metroconsult S.R.L.**
**Via Sestriere 100**
**10060 None (TO) (IT)**

(56) References cited:
**EP-A- 0 838 928**   **FR-A- 2 786 642**
**IT-A1- TO 950 258**

• **V. MIGNONE, A. MORELLO: "CD3: pilot-free channel estimation for increased capacity in DVB-T2"** , [Online] September 2007 (2007-09), pages 1-1, XP002533921 Turin Retrieved from the Internet: URL:http://www.crit.rai.it/eng/ news/IBC07/ ibc2007-CD3forDVB-T2.pdf> [retrieved on 2009-06-25]
• **VITTORIA MIGNONE ET AL: "CD3-OFDM: A Novel Demodulation Scheme for Fixed and Mobile Receivers" IEEE TRANSACTIONS ON COMMUNICATIONS, IEEE SERVICE CENTER, PISCATAWAY, NJ, US, vol. 44, no. 9, 1 September 1996 (1996-09-01), XP011008784 ISSN: 0090-6778**
• **HARADA Y ET AL: "An implementation of OFDM receiver for digital terrestrial television broadcasting and its technologies" BROADCASTING CONVENTION, 1997. IBS 97., INTERNATIONAL (CONF. PUBL. 447 ) AMSTERDAM, NETHERLANDS 12-16 SEPT. 1997, LONDON, UK,IEE, UK, 12 September 1997 (1997-09-12), pages 337-342, XP006508780**
• **MIGNONE V ET AL: "An advanced algorithm for improving DVB-T coverage in SFN" BROADCASTING CONVENTION, 1997. IBS 97., INTERNATIONAL (CONF. PUBL. 447 ) AMSTERDAM, NETHERLANDS 12-16 SEPT. 1997, LONDON, UK,IEE, UK, 12 September 1997 (1997-09-12), pages 534-540, XP006508812**

EP 2 319 217 B1

- **MIGNONE V ET AL: "CD3-OFDM: A NEW CHANNEL ESTIMATION METHOD TO IMPROVE THE SPECTRUM EFFICIENCY IN DIGITAL TERRESTRIAL TELEVISION SYSTEMS" INTERNATIONAL BROADCASTING CONVENTION, XX, XX, no. 413, 14 September 1995 (1995-09-14), pages 122-128, XP000617513 cited in the application**

## Description

The invention relates to a method and an apparatus for receiving coded frequency division multiplexed numerical signal, i.e. multi-carrier, modulation, also known as C-OFDM (Coded Orthogonal Frequency Division Multiplex).

A description of OFDM modulation can be found, for example, in S.B. Weinstein, P.M. Ebert, Data Transmission by Frequency-Division Multiplexing using the Discrete Fourier Transform, IEEE Transactions on Communications, COM-19(5), pp. 628-634, October 1971.

The invention is mainly, though not exclusively, intended for the reception of numerical audio and video signals, in particular of those signals transmitted in accordance with the second-generation European standard for broadcasting terrestrial television signals, which is still under definition (hereafter referred to, for simplicity, as DVB-T2, Digital Video Broadcasting - Terrestrial).

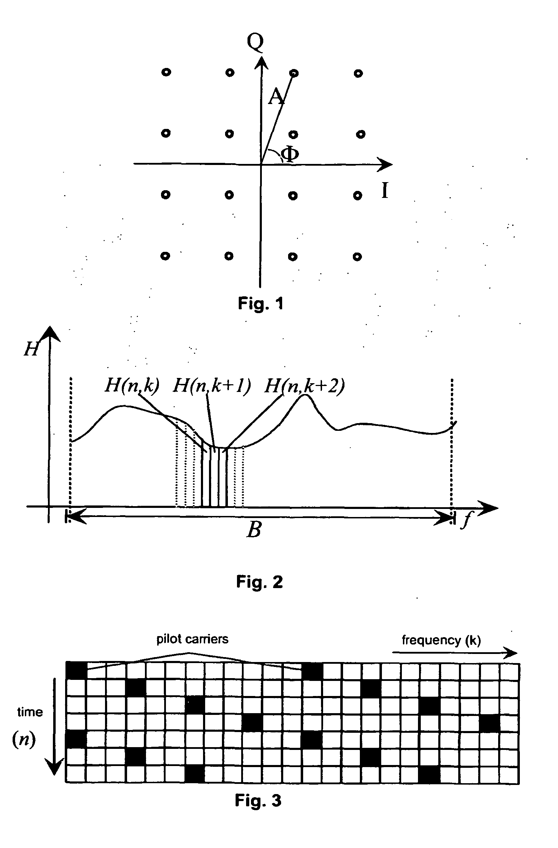

The invention is applicable to the classic case of transmission from a single antenna or from multiple antennas wherein the same signal is transmitted by all antennas, as well as to the case wherein the signal is emitted by two broadcasting stations according to the diversity scheme proposed in Siavash M. Alamouti, "A Simple Transmit Diversity Technique for- Wireless Communications", IEEE Journal on Selected Areas in Communications, vol. 16, no. 8, October 1998, pp. 1451-1458. As known, in the C-OFDM modulation hundreds or thousands of narrow-band, low-bit-rate numerical carriers are transmitted by frequency multiplexing, which are width and phase-modulated in a manner such that the elementary components of the OFDM symbols correspond to predetermined points of the width-phase plan. The set of points makes up a so-called "constellation". Typically 4, 16, 64 or 256-point constellations are employed, such as those known as QPSK, 16-QAM, 64-QAM, 256-QAM. A graphical representation of the 16-QAM constellation is shown in Fig. 1, where I and Q are the in-phase and quadrature components of a carrier, and the marked points are the sixteen modulation states recognized as belonging to the constellation and corresponding to respective elementary components of the OFDM symbols (e.g. numbers 1 to 16, i.e. the sixteen possible four-bit combinations). In substance, the thousands of bits making up one OFDM symbol are subdivided into four-bit elementary groups or components, and each component is associated with one state of the constellation. With reference to Fig. 1, the signal $\underline{x}(n,k)$ (where the underlining indicates a complex vector), corresponding to an elementary component of the OFDM symbol, can be represented by the formula:

$$\underline{x}(n,k) = A(n,k)\, e^{j\Phi(n,k)}$$

where $\Phi(n,k)$ is the phase information and $A(n, k)$ is the width information, and $\underline{x}(n, k)$ belongs, for example, to one of the QPSK, 16-QAM, 64-QAM, 256-QAM constellations. The variable $n$ is a time-discrete variable indicating the OFDM symbol taken into account ($n \in 0,1,2,3,...$), and $k$ is a frequency-discrete variable corresponding to the index of the C-OFDM carrier it refers to ($k \in 0,1,2,3,..., k_{max}$, where $k_{max}$ indicates the last active carrier of the system).

In order to generate the $n$-th OFDM symbol to be transmitted, the modulator executes the inverse discrete Fourier transform (IFFT) on $N$ complex vectors $\underline{x}(n,k)$ ($k=0,.....,N\,1$), some of which are null to make the filtering operations easier. Likewise, the demodulator executes the discrete Fourier transform (FFT) on the received signal in order to simultaneously demodulate the $N$ sub-carriers making up the OFDM signal. The sampling frequency $f_c$ of the signal in the time domain (often normalized to 1 for simplicity) is such as to generate $N$ samples in time of useful OFDM symbol $T_u$, so that $T_u = N/f_c$, where $N$ is the number of samples on which the Fourier transform is executed.

OFDM ensures absence of interference (i.e. orthogonality) among the carriers by selecting a frequency distance among them which is equal to the useful signalling speed (symbol-rate) $1/T_u$. The duration of the symbol $T_u$ is very long, since the total bit stream of the symbol is subdivided among the many carriers transmitted in parallel; therefore, the single carriers take up a very small portion of the spectrum. This makes OFDM modulation very robust in the presence of frequency selective fading produced by echoes on the terrestrial propagation channel. In the case of a frequency-selective linear channel, the frequency response of the channel $\underline{H}(f)$ to the $n$-th symbol can be approximated around the single OFDM carriers as a succession of sections $\underline{H}(n,k)$ which are constant and therefore not distorting:

$$\underline{H}(n,k) = H(n,k)\, e^{j\Theta(n,k)}$$

In the diagram of Fig. 2, X axis indicates frequency $f$ and Y axis indicates the absolute value or width $H(n, k)$ of the transfer function of a typical transmission channel. Frequency interval $B$ is the total band of the C-OFDM transmission.

In many cases, values $\underline{H}(n,k)$ remain substantially constant even as *n* changes (i.e. for successive OFDM symbols), e.g. in the case of terrestrial television broadcasting to stationary receivers. In the presence of moving objects near the antenna and in the case of mobile receivers, the curve of Fig. 2 will evolve over time, sometimes even very quickly.

Furthermore, in order to ensure echo insensitivity, C-OFDM system provides a safety interval having a duration $Tg = M /f_c$ between a symbol and the next one, consisting of *M* samples which cannot be used by the receiver, so as to prevent adjacent symbols from interfering with each other (ISI, Inter-Symbol Interference). It follows that the total duration of a symbol, equal to $T_s$, is the sum of the duration of the useful symbol $T_u$ and the safety interval $T_g$. The use of long safety intervals allows the system to operate in the presence of much delayed echoes (e.g. echoes delayed by some tens or hundreds of microseconds), but requires a long symbol duration $T_u$ to preserve a good transmission efficiency. Since the spacing between the C-OFDM carriers is $1/T_u$, as $T_u$ increases the spacing between carriers decreases, and the number of C-OFDM carriers grows for the same band taken up by the signal.

The complex elementary signal received $\underline{y}(n,k)$ (after being translated into base band and demodulated through FFT) is a replica of the transmitted signal multiplied by the channel frequency response and added to a narrow-band white Gaussian noise component $\underline{n}(n,k)$. The received complex signal will therefore be:

$$\underline{y}(n,k) = \underline{x}(n,k) \bullet \underline{H}(n,k) + \underline{n}(n,k) = A(n,k) \bullet H(n,k) \bullet e^{j[\Phi(n,k)+\Theta(n,k)]} + \underline{n}(n,k)$$

A coherent demodulation will provide for equalizing the received signal according to the following rule:

$$\underline{z}(n,k) = \underline{y}(n,k) / \hat{\underline{H}}(n,k) \cong A(n,k) \bullet e^{j[\Phi(n,k)]} + \underline{v}(n,k)$$

where $\underline{v}(n, k) = \underline{n}(n, k) / \hat{\underline{H}}(n, k)$.

This method requires the receiver to elaborate an estimate (indicated by the symbol ^) of the channel frequency response $\underline{H}(n,k)$. In order to do this, it is necessary to know a reliable estimate $\hat{\underline{x}}(n,k)$ of the transmitted signal and to evaluate $\hat{\underline{H}}(n, k)$ as:

$$\hat{\underline{H}}(n,k) = \underline{y}(n,k) / \hat{\underline{x}}(n,k) \qquad\qquad (1)$$

Two techniques have been proposed for estimating the channel transfer function for C-OFDM signals through the formula (I):

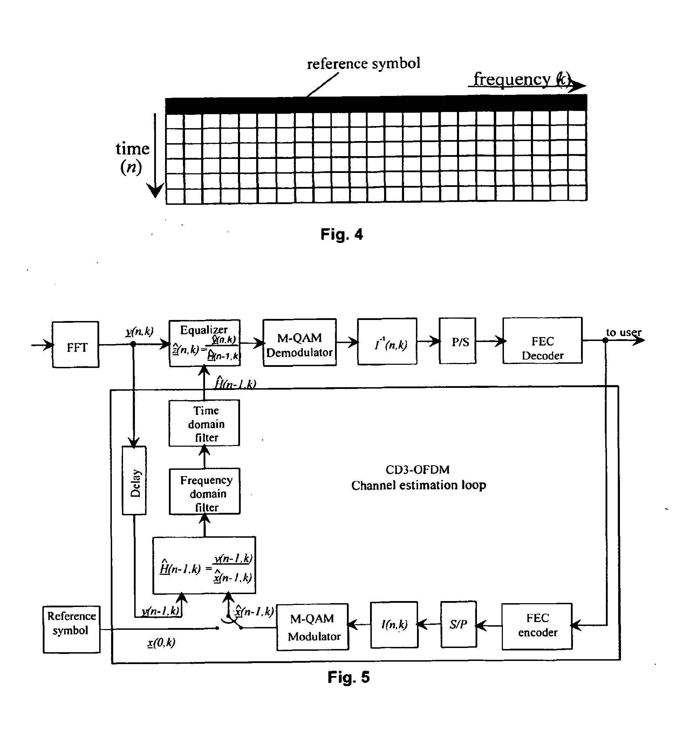

- one is based on the introduction of a "comb" of modulated pilot carriers into the C-OFDM symbol (as shown in Fig. 3, where the dark boxes indicate the pilot carriers), which pilot carriers consist of vectors $\underline{x}(n,k)$ known to the receiver;
- the other one, called CD3-OFDM, uses the OFDM symbol received during the previous step, which is then corrected, re-coded and re-modulated in order to obtain a reliable estimate $\hat{\underline{x}}(n,k)$ of the transmitted sequence; this technique starts the equalization process based on a known symbol transmitted periodically (reference symbol, dark boxes in Fig. 4).

In the case of a reception system using pilot carriers in accordance with Fig. 3, the pilot carriers are extracted from the received signal, and then the estimate $\hat{\underline{H}}(n,k)$ of the channel transfer function for those values of *k* corresponding to a pilot carrier (sub-sampling of $\hat{\underline{H}}(n,k)$ in the frequency domain) is obtained through the formula (1) . By means of time and frequency interpolations or filters, or through a series of phase-locked loops (PLL), the estimate of $\underline{H}(n, k)$ is obtained for all values of *n* and *k*. The time sub-sampling must be such that the channel remains quasi-stationary between two successive estimates, whereas the frequency sub-sampling must ensure a number of pilot carriers at least equal to *N/M* in order to equalize all echoes with delays up to $T_g$ (sampling theorem).

CD3-OFDM technique allows to obtain an estimate of $\underline{H}(n,k)$ for all values of k in accordance with the following principle (Fig. 5). The binary signal outputted by the FEC decoder for error correction is re-coded, interlaced and re-modulated by a M-QAM modulator by executing the same process previously carried out by the transmitter in order to obtain a reliable estimate $\hat{\underline{x}}(n,k)$ of the transmitted sequence. The signal thus rebuilt is used for estimating, through the formula (1), the channel frequency response, which is then filtered in the frequency and time domains in order to reduce the effects of noise and of wrong estimates of $\underline{x}(n,k)$.

CD3-OFDM technique has been described in the Italian patent no. TO95 A 000258, filed on 5th April 1995; in V. Mignone, A. Morello, "CD3-OFDM: a novel demodulation scheme for fixed and mobile receivers", IEEE Transactions on Communications, Vol. 44, No. 9, September 1996; and in V. Mignone, A. Morello, M. Visintin, "CD3-OFDM, *a new channel estimation method to improve the spectrum efficiency in digital terrestrial television systems*", IBC'95 Conference, Amsterdam; in V. Mignone, A. Morello, M. Visintin, "*Advanced algorithm for improving DVB-T coverage in SFN*", IBC'97 Conference, Amsterdam, and in the European patent no. EP 0 838.928, filed on 18th October 1997 (with priority dated 25th October 1996 ). CD3-OFDM technique as described in prior-art documents is applicable to systems using error correction methods so that, given a decoding error, the number of wrongly re-coded bits will be very small. On the contrary, when a decoding error affects a large number of re-coded bits, prior CD3-OFDM technique is no longer applicable because this process tends to diverge in a few OFDM symbols. This is the case of LDPC (Low-Density Parity-Check) codes, in particular of those adopted by the DVB-T2 standard, wherein a wrongly decoded bit will propagate the error into the word re-coded on the following bits.

Besides, CD3-OFDM technique as described in prior-art documents is only applicable to transmissions involving only one antenna in transmission and only one antenna in reception (SISO, Single Input Single Output). The latest systems for terrestrial channel broadcasting often use multiple antennas in transmission (whether co-located or distributed) (MISO, Multiple Input Single Output) and/or in reception (MIMO, Multiple Input Multple Output; SIMO, Single Input Multiple Output) to improve the quality of the received signal in the presence of multi-path propagation. In such scenarios, increasing the number of transmission and reception antennas is useful for creating diversity among the received signals (Antenna Diversity) which, when appropriately encoded in transmission, can be discriminated or anyway combined in a constructive manner at the receiver. Many transmission diversity techniques for MISO/MIMO systems with multiple transmission antennas have been proposed in the literature, the best known being those described in Siavash M. Alamouti, "A Simple Transmit Diversity Technique for Wireless Communications", IEEE Journal On Selected Areas In Communications, vol. 16, no. 8, pp. 1451-1458, October 1998, hereafter referred to as Alamouti, and in J.-C. Belfiore, G. Rekaya, E. Viterbo, "The Golden Code: A 2 x 2 Full-Rate Space-Time Code with Non-Vanishing Determinants," IEEE Transactions on Information Theory, vol. 51, no. 4, pp. 1432-1436, April 2005, hereafter referred to as Golden Code.

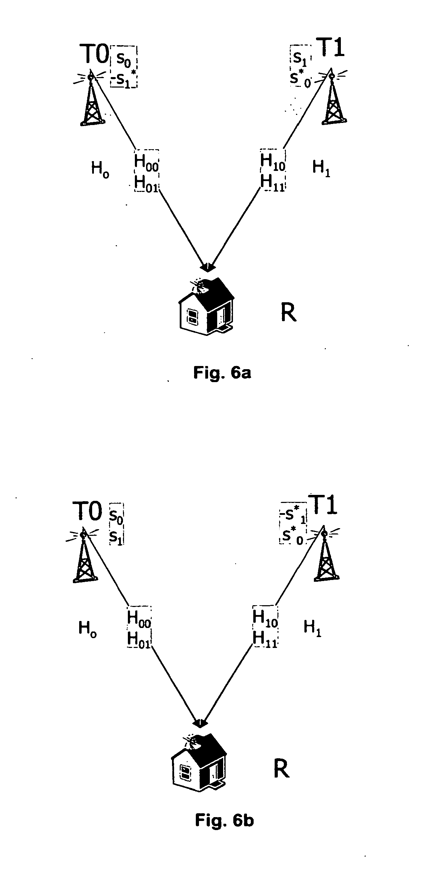

Alamouti technique considers a scenario consisting of two transmission antennas, T0 and T1, and one reception antenna (Fig. 6a). The channel between transmitting antenna T0 and the receiver is designated $H_0$, while the channel between transmitting antenna T1 and the receiver is designated $H_1$. The signal transmitted at instant 2n by antenna T0 is $s_0$, while the one transmitted by antenna T1 is $s_1$. At instant $2n$ +1, $(-s_1{}^*)$ is transmitted by T0 and $s_0{}^*$ is transmitted by T1, the character* denoting a conjugated complex operation. The application of such techniques to OFDM modulation may occur in both the time and frequency domains (the latter case taking into account consecutive carriers instead of consecutive instants), the choice of the domain being related to the characteristics of the channel and to the possibility of fulfilling the basic assumption of the Alamouti technique, i.e. the quasi-stationariness of the channel on consecutive pairs of symbols or frequencies:

$$H_0(2n,k) = H_{00} = H_0(2n+1,k) = H_{01} = H_0 = \alpha_0 e^{j\theta_0}$$

$$H_1(2n,k) = H_{11} = H_1(2n+1,k) = H_{10} = H_1 = \alpha_1 e^{j\theta_1}$$

when applied in the time domain,

$$H_0(n,2k) = H_{00} = H_0(n,2k+1) = H_{01} = H_0 = \alpha_0 e^{j\theta_0}$$

$$H_1(n,2k) = H_{11} = H_1(n,2k+1) = H_{10} = H_1 = \alpha_1 e^{j\theta_1}$$

when applied in the frequency domain.

When this technique is applied to OFDM modulation in the frequency domain, the received signal will be:

$$R_0 = R(n,2k) = H_{00}s_0 + H_{10}s_1 + n_0$$

$$R_1 = R(n,2k+1) = -H_{01}s_1^* + H_{11}s_0^* + n_1$$

which will become:

$$R_0 = R(n,2k) = H_0 s_0 + H_1 s_1 + n_0$$

$$R_1 = R(n,2k+1) = -H_0 s_1^* + H_1 s_0^* + n_1$$

if the channel is quasi-stationary in the frequency domain for the carrier pair *(2k, 2k+1)*.

The conventional Alamouti technique combines the received signals according to the following expression in the case of quasi-stationariness between adjacent carrier pairs:

$$\tilde{s}_0 = H_0^* R_0 + H_1 R_1^* \cong (\alpha_0^2 + \alpha_1^2) s_0$$

$$\tilde{s}_1 = H_1^* R_0 - H_0 R_1^* \cong (\alpha_0^2 + \alpha_1^2) s_1$$

When the quasi-stationariness hypothesis is not fulfilled, alternative techniques are available for solving the linear system, e.g. the zero-forcing technique, wherein:

$$\tilde{s}_0 = H_{01}^* R_0 + H_{10} R_1^* \cong (H_{00} H_{01}^* + H_{10} H_{11}^*) s_0$$

$$\tilde{s}_1 = H_{11}^* R_0 - H_{00} R_1^* \cong (H_{00} H_{01}^* + H_{10} H_{11}^*) s_1$$

The transmission diversity techniques for MISO/MIMO systems proposed in the literature always assume a perfect knowledge of the channel, estimated by transmitting known sequences to the receiver.

The DVB-T2 system adopts the Alamouti technique in the frequency domain in accordance with the following modified scheme, shown in Fig. 6b, which keeps the orthogonality properties of the signals at the receiver unchanged while allowing to keep the signal sent by transmitter T0 unchanged as well, when referring to SISO configuration case in order to provide a simpler description of the system, which may have two possible configurations: SISO and MISO with two transmitters. In detail, the signal transmitted on carrier 2*k* by antenna T0 is $s_0$, while the one transmitted by antenna $T_1$ is $(-s_1^*)$. On the carrier *2k+1*, $s_1$ is transmitted by T0 and $s_0^*$ is transmitted by T1.

The received signal will be:

$$R_0 = R(n,2k) = H_{00}s_0 - H_{10}s_1^* + n_0$$

$$R_1 = R(n,2k+1) = H_{01}s_1 + H_{11}s_0^* + n_1$$

which will become:

$$R_0 = R(n,2k) = H_0 s_0 - H_1 s_1^* + n_0$$

$$R_1 = R(n,2k+1) = H_0 s_1 + H_1 s_0^* + n_1$$

if the channel is quasi-stationary in the frequency domain for the carrier pair *(2k, 2k+1)*.

If there is quasi-stationariness between adjacent carrier pairs, the estimate of the received signal will be:

$$\widetilde{s}_0 = H_0^* R_0 + H_1 R_1^* \cong (\alpha_0^2 + \alpha_1^2) s_0$$

$$\widetilde{s}_1 = -H_1 R_0^* + H_0^* R_1 \cong (\alpha_0^2 + \alpha_1^2) s_1$$

If the quasi-stationariness hypothesis is not fulfilled, the application of the zero-forcing technique will lead to the following result:

$$\widetilde{s}_0 = \overline{H}_{01}^* R_0 + \overline{H}_{10} R_1^* \cong (H_{00} H_{01}^* + H_{10} \overline{H}_{11}^*) s_0$$

$$\widetilde{s}_1 = -H_{11} R_0^* + H_{00}^* R_1 \cong (H_{00} H_{01}^* + H_{10} H_{11}^*) s_1$$

It is the main object of the present invention to provide a method and an apparatus for receiving coded frequency division multiplexing numerical signals for transmission systems, in particular of the spatial diversity type, which are adapted to prevent error propagation whenever a decoded code word is wrong.

It is another object of the present invention to provide a method and an apparatus for receiving coded frequency division multiplexing numerical signals for transmission systems, in particular of the spatial diversity type, which improve the transmission efficiency of the system.

It is a further object of the present invention to provide a method and an apparatus for receiving coded frequency division multiplexing numerical signals for transmission systems which ensure a reliable estimation of the frequency response of the transmission channel and equalization without needing pilot data in spatial diversity schemes.

These and other objects of the invention are achieved through the device as claimed in the appended claims, which are intended as an integral part of the present description. The method is especially useful whenever the adopted channel encoding causes error multiplication on the re-coded word, as is the case, for example, of the LDPC codes adopted by the DVB-T2 standard.

The reception Method according to the invention also aims at providing a reliable estimation of the frequency response of the transmission channel and equalization without needing pilot data in spatial diversity schemes, through the application of the CD3-OFDM method to transmission diversity techniques.

In particular, the invention will now be described in detail when applied in the frequency domain to the Alamouti technique, in the variant adopted by DVB-T2. This method is nevertheless also applicable to the original formulation of the Alamouti technique, as well as to any spatial diversity transmission technique.

These and other objects and advantages, which will become apparent from the following description, are achieved by the invention through a method for receiving numerical signals with C-OFDM modulation having the features set out in claim 1. The invention also relates to a receiver apparatus incorporating the principles of said method according to claim 11.

The invention will now be described in detail in some of its preferred embodiments, which are provided herein by way of non-limiting example by referring to the annexed drawings, wherein:

- Fig. 1 is a diagrammatic representation of a 16-QAM constellation;
- Fig. 2 is a graph of a transfer function of a typical example of a transmission channel;
- Fig. 3 diagrammatically shows the structure of an OFDM symbol for the DVB-T system;
- Fig. 4 diagrammatically shows the structure of an OFDM symbol for a CD3-OFDM system;
- Fig. 5 is a block diagram of a prior-art receiver in accordance with the CD3-OFDM principle;
- Fig. 6a shows a MISO configuration, with two transmission antennas, according to the traditional Alamouti technique;
- Fig. 6b shows a MISO configuration, with two transmission antennas, according to the Alamouti technique applied to the DVB-T2 standard;
- Fig. 7 is a block diagram of a receiver according to the invention applied to an Alamouti-type spatial diversity transmission scheme.

In a first embodiment of the invention, which is applicable to both the SISO and MISO cases, every time a decoded code word is wrong (decoders, in particular LDPC-code decoders, allow to know if the code word has been decoded successfully), the channel transfer function estimate will not be updated for the carriers concerned by that specific code word, upstream of the frequency filter, but will only be updated for those carriers which carry bits belonging to properly decoded code words. Consequently, the switch driven by the decoder will switch the transfer function estimate H(n-2, k) to the previous step every time the decoder detects a wrong decoding of the code word concerning the estimate of x(n-1,k).

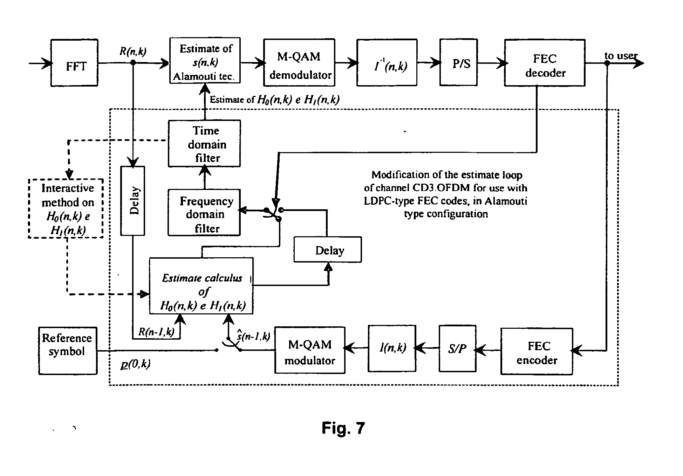

With reference to Fig. 7, in a second embodiment of the invention which is applicable to transmission diversity techniques, the digital signal to be transmitted is generated in accordance with the C-OFDM transmission technique. Each block of binary symbols is coded by a FEC encoder, interlaced, transformed into the symbols of the chosen numerical modulation (generally QAM modulations are used in the terrestrial environment), and associated with the carriers of the OFDM symbols, s(n,k), where k represents the normalized frequency of the carrier to which s(n,k) refers, and $n \in 0,1,2,3,...$ represents the time normalized with respect to the duration of one OFDM symbol.

According to the DVB-T2 variant of the Alamouti technique applied in the frequency domain, given the sequence of symbols to be carried in one OFDM symbol at instant n=1 $\{s_0, s_1, S_2, S_3, S_4, S_5, ... \}$, the sequence of symbols transmitted by the transmitter T0 will be $\{s(1,0)=s_0, s(1,1) = s_1, s(1,2)=s_2, s(1,3) = s_3, s(1,4)=s_4, s(1,5) = s_5, ...\}$, whereas the one transmitted by the transmitter T1 will be $\{s(1,0)=-s_1^*, s(1,1) = s_0^*, s(1,2)=-s_3^*, s(1,3) = s_2^*, s(1,4)=-s_5^*, s(1,5) = s_4^*, ... \}$.

According to the reception scheme compliant with the Alamouti technique, the channel transfer function must be known to the receiver R comprising a decoder. Conventional transfer function estimation techniques are based on the introduction of pilot carriers into the pattern of OFDM symbols. The technique according to the invention is based on the CD3-OFDM technique, and therefore it does not use the transmission of known sequences to the receiver, except for an initial known symbol which is then repeated periodically.

Assuming that the channel transfer function estimate *H(0,k)* is known at symbol n=0, it will be used at symbol n=1 for demodulating the received signal according to one of the algorithms proposed for the Alamouti technique, e.g. the zero forcing technique. In order to estimate the channel transfer function $\underline{H}_0(0,k)$ and $\underline{H}_1(0,k)$ at time n=0, an OFDM symbol known to the receiver and comprising the carriers $\{p_0, p_1, p_2, p_3, p_4, p_5,...\}$ is transmitted by antennas T0 and T 1 at time n=0.

The known OFDM symbol can then be repeated every N data OFDM symbols, N being any number as desired: the greater number N, the lower the known symbol capacity consumption, but the longer the time that a receiver must wait at start-up (or after a possible unlocking due, for example, to a noise peak) before beginning the demodulation process; on the contrary, the smaller number N, the higher the transmission capacity dedicated thereto which cannot be used for data transmission, but the shorter the average wait time before the beginning of the demodulation process. In DVB-T2 system, the time elapsing between a pilot OFDM symbol and the next one is within the range of 100-200 ms.

The demodulated and decoded signal is then processed according to CD3-OFDM technique in order to obtain an estimate of the transmitted symbols. In particular, the binary signal outputted by the FEC decoder for error correction is re-coded, interlaced, and re-modulated by M-QAM modulator in order to obtain a reliable estimate $\hat{s}(n,k)$ of the sequence transmitted and carried by an OFDM symbol at instant n=1 $\{\hat{s}_0, \hat{s}_1, \hat{s}_2,...\}$. The estimate of the sequence of symbols transmitted by transmitter T0 is generated in accordance with the Alamouti scheme $\{\hat{s}(1,0)=\hat{s}_0 \; \hat{s}(1,1)=\hat{s}_1, \hat{s}(1,2)=\hat{s}_2, \hat{s}(1,3)=\hat{s}_3, \hat{s}(1,4)=\hat{s}_4, \hat{s}(1,5)=\hat{s}_5, ...\}$. The estimate of the sequence transmitted by transmitter T1 is generated in a similar manner $\{\hat{s}(1,0)= -\hat{s}_1^*, \hat{s}(1,1) =\hat{s}_0^* \; \hat{s}(1,2)=-\hat{s}_3^*, \hat{s}(1,3)=\hat{s}_2^*, \hat{s}(1,4)=-\hat{s}_5^*, \hat{s}(1,5)=\hat{s}_4^*, ...\}$. The signal thus rebuilt is used for estimating the channel frequency response $\underline{H}_0(l,k)$ and $\underline{H}_1(1,k)$ for each carrier *k* at time *n*=1 by solving the linear system:

$$R_0 = R(1,2k) = H_{0,2k}\hat{s}_{2k} - H_{1,2k}\hat{s}_{2k+1}^* + n_{2k}$$

$$R_1 = R(1,2k+1) = H_{0,2k+1}\hat{s}_{2k+1} + H_{1,2k+1}\hat{s}_{2k}^* + n_{2k+1}$$

to be applied to the carrier pairs of C-OFDM system ($2k$, $2k+1$) ((0,1), (2,3), (4,5),....), where R(1,2k) and R(1,2k+1) are the signals received on the carriers $2k$, $2k+1$ at time $n=1$. Since the system has no univocal solution, due to the fact that there are two equations and four unknown quantities, according to the proposed solution a quasi-stationariness hypothesis is made between the carriers $2k$ and $2k+1$, so that it can be assumed that:

$$H_{0,2k}=H_{0,2k+1}=H_0$$

$$H_{1,2k}=H_{1,2k+1}=H_1$$

In this case, the linear system will become:

$$R_0 = R(1,2k) = H_0\hat{s}_{2k} - H_1\hat{s}_{2k+1}^* + n_{2k}$$

$$R_1 = R(1,2k+1) = H_0\hat{s}_{2k+1} + H_1\hat{s}_{2k}^* + n_{2k+1}$$

and the estimates of $H_0$ and $H_1$ can be calculated, assuming that there is no noise, as:

$$\hat{H}_0 = \frac{1}{|\hat{s}_{2k}|^2 + |\hat{s}_{2k+1}|^2}\left(R_0\hat{s}_{2k}^* + R_1\hat{s}_{2k+1}^*\right)$$

$$\hat{H}_1 = \frac{1}{|\hat{s}_{2k}|^2 + |\hat{s}_{2k+1}|^2}\left(- R_0\hat{s}_{2k+1} + R_1\hat{s}_{2k}\right)$$

$\underline{H}_0(1,k)$ and $\underline{H}_1(1,k)$ are then filtered in the frequency and time domains in order to reduce the effects of noise and of wrong estimates of $\underline{s}(n,k)$, in accordance with the conventional CD3-OFDM technique as shown in Fig. 5. The process will then be repeated on the next symbols $n=2, 3, ...$ by using, as a channel transfer function estimate from antennas T0 and T1 at time n, the one relating to time $n$-1.

In the event that the hypothesis of quasi-stationariness on $H_0$ and $H_1$ is not fulfilled, the invention proposes an iterative process to be added downstream of the initial estimate based on the quasi-stationariness hypothesis. Given the estimates of $\underline{H}_0(n,k)$ and $\underline{H}_1(n,k)$ carried out at symbol $n$ on the basis of the signal estimate of step $n$-1, and then filtered in the frequency domain and possibly also in the time domain, thus obtaining the filtered estimates $\underline{H}_{0,F}(n,k)$ and $\underline{H}_{1,F}(n,k)$:

1. The error $\Delta_0(n,k)$ and $\Delta_1(n,k)$ in the estimate of $\underline{H}_0(n,k)$ and $\underline{H}_1(n,k)$ is calculated as follows:

$$\Delta_0(n,k)= \underline{H}_0(n,k)-\underline{H}_{0,F}(n,k)= \Delta_{0,k}$$

$$\Delta_1(n,k)= \underline{H}_1(n,k)\text{-}\underline{H}_{1,F}(n,k) = \Delta_{1,k}$$

2. The following substitution is then made:

$$H_{0,k}=H_0+\Delta_{0,k}$$

$$H_{1,k}=H_1+\Delta_{1,k}$$

in the system:

$$R_0 = R(1,2k) = H_{0,2k}\hat{s}_{2k} - H_{1,2k}\hat{s}^*_{2k+1}$$

$$R_1 = R(1,2k+1) = H_{0,2k+1}\hat{s}_{2k+1} + H_{1,2k+1}\hat{s}^*_{2k}$$

The system thus becomes a system of 2 equations in 2 unknown quantities.

$$R_0 = R(1,2k) = ( H_0 + \Delta_{0,2k} )\hat{s}_{2k} - ( H_1 + \Delta_{1,2k} )\hat{s}^*_{2k+1}$$

$$R_1 = R(1,2k+1) = ( H_0 + \Delta_{1,2k+1} )\hat{s}_{2k+1} + ( H_1 + \Delta_{1,2k+1} )\hat{s}^*_{2k}$$

which can be solved by $H_0$ and $H_1$. By substituting:

$$R'_0 = R_0 - \Delta_{0,2k}\hat{s}_{2k} + \Delta_{1,2k}\hat{s}^*_{2k+1}$$

$$R'_1 = R_1 - \Delta_{1,2k+1}\hat{s}_{2k+1} - \Delta_{1,2k+1}\hat{s}^*_{2k}$$

the following is obtained:

$$\hat{H}_0 = \frac{1}{|\hat{s}_{2k}|^2 + |\hat{s}_{2k+1}|^2}\left(R'_0\hat{s}^*_{2k} + R'_1\hat{s}_{2k+1}\right)$$

$$\hat{H}_1 = \frac{1}{|\hat{s}_{2k}|^2 + |\hat{s}_{2k+1}|^2}\left(R'_0\hat{s}^*_{2k+1} - R'_1\hat{s}_{2k}\right)$$

3. The estimates of $H_0(n,k)$ and $\underline{H}_1(n,k)$ thus obtained are then filtered in order to obtain $\underline{H}_{0,F}(n,k)$ and $\underline{H}_{1,F}(n,k)$,

The process described at steps 1 to 3 may be repeated for a predetermined number of times or until the error falls below a preset threshold, the value of which may vary according to the modulation in use, taking into account that the higher the order of the modulation, the higher the sensitivity thereof to errors in the estimation of the channel transfer function.

The features of the present invention, as well as the advantages thereof, are apparent from the above description.

The most important advantage offered by the invention is the possibility of improving the transmission efficiency of the system by not having to transmit pilot data, while at the same time exploiting the spatial diversity techniques in order to improve the performance of the system in the presence of fading.

A further advantage is a higher flexibility of adaptation to the channel characteristics, in terms of echo delay, offered by the proposed technique compared to the techniques proposed in the existing literature.

It can therefore be easily understood that the present invention is not limited to a method and an apparatus for receiving coded frequency division multiplexing numerical signals for transmission systems, in particular of the spatial diversity type, but may be subject to many modifications, improvements or replacements of equivalent parts and elements without departing from the inventive idea, as clearly specified in the following claims.

**Claims**

1.  Method for receiving coded frequency division multiplexing numerical signals, said method comprising the steps of:

    - receiving, through a receiver (R), at least one coded frequency division multiplexing numerical signal, said at least one signal comprising a plurality of symbols coded according to a numerical modulation and transmitted at time instants which are normalized with respect to the duration of a symbol;
    - estimating a transfer function of at least one transmission channel through which said at least one numerical signal is received, wherein, in order to demodulate said at least one signal received at a certain time instant, said transfer function estimated at the previous time instant is used, **characterized in that**, if said receiver recognizes a wrong decoding of a code word, in particular by decoding the LDPC codes, said transfer function will only be updated for those carriers which carry bits belonging to correctly decoded code words.

2.  Method according to claim 1, **characterized in that**, should the transfer function estimated at the previous time instant be unavailable, said transfer function will be estimated by using a symbol which is known to said receiver.

3.  Method according to claim 1, **characterized in that** said plurality of symbols can be generated in accordance with the DVB-T2 variant of the Alamouti scheme.

4.  Method according to claim 1, **characterized in that** said estimated transfer function is filtered in the frequency and time domain in order to reduce the noise effects of said at least one transmission channel.

5.  Method according to claim 1, **characterized in that** said at least one signal comprises two components received through a first and a second transmission channel, and that the transfer function ($\hat{H}_0, \hat{H}_1$) respectively estimated on said two distinct channels is given by:

$$\hat{H}_0 = \frac{1}{\left|\hat{s}_{2k}\right|^2 + \left|\hat{s}_{2k+1}\right|^2} \left(R_0 \hat{s}_{2k}^{*} + R_1 \hat{s}_{2k+1}^{*}\right)$$

$$\hat{H}_1 = \frac{1}{\left|\hat{s}_{2k}\right|^2 + \left|\hat{s}_{2k+1}\right|^2} \left(-R_0 \hat{s}_{2k+1} + R_1 \hat{s}_{2k}\right)$$

    where $R_0$ is a first signal component received through said first transmission channel, $R_1$ is a second signal component received through said second transmission channel, and $\hat{s}_{2k}$ and $\hat{s}_{2k+1}$ are estimates of the signal transmitted at two consecutive carriers (k,k+1).

6.  Method according to claim 5, **characterized by** comprising an iterative procedure for reducing the error in the estimate of said transfer functions, said iterative procedure ending when the error falls below a preset threshold.

7. Method according to claim 6, **characterized in that** the transfer function ($\hat{H}_0$, $\hat{H}_1$) respectively estimated on said two distinct channels is given by:

$$\hat{H}_0 = \frac{1}{|\hat{s}_{2k}|^2 + |\hat{s}_{2k+1}|^2}\left(R'_0\hat{s}^*_{2k} + R'_1\hat{s}_{2k+1}\right)$$

$$\hat{H}_1 = \frac{1}{|\hat{s}_{2k}|^2 + |\hat{s}_{2k+1}|^2}\left(R'_0\hat{s}^*_{2k+1} - R'_1\hat{s}_{2k}\right)$$

where $R'_0$ is a first signal component received through said first transmission channel, and $R'_1$ is a second signal component received through said second transmission channel, both of which containing a piece of information about said error.

8. Method according to claim 1, **characterized in that** said numerical modulation is of the QAM type.

9. Decoder adapted to decode a coded frequency division multiplexing numerical signal according to any of claims 1 to 8.

10. Receiver comprising a decoder according to claim 9.


**Patentansprüche**

1. Verfahren zum Empfangen von numerischen, codierten Frequenz-Multiplex-Signalen, wobei das Verfahren die Schritte umfasst:

- Empfangen, durch einen Empfänger (R), zumindest eines numerischen, codierten Frequenz-Multiplex-Signals, wobei das zumindest eine Signal eine Mehrzahl von Symbolen umfasst, die gemäß einer numerischen Modulation codiert wurden und zu Zeitpunkten übertragen wurden, die in Bezug auf die Dauer eines Symbols normalisiert sind;
- Schätzen einer Übertragungsfunktion zumindest eines Übertragungskanals, durch den das zumindest eine numerische Signal empfangen wird, wobei zum Demodulieren des zu einem bestimmten Zeitpunkt empfangenen zumindest einen Signals die zu dem vorangegangenen Zeitpunkt geschätzte Übertragungsfunktion verwendet wird, **dadurch gekennzeichnet, dass**, wenn der Empfänger eine falsche Decodierung eines Codeworts erkennt, insbesondere durch Decodieren der LDPC-Codes, die Übertragungsfunktion nur für diejenigen Träger aktualisiert wird, die Bits tragen, die zu korrekt decodierten Codeworten gehören.

2. Verfahren nach Anspruch 1, **dadurch gekennzeichnet, dass**, sollte die zu dem vorangegangenen Zeitpunkt geschätzte Übertragungsfunktion nicht verfügbar sein, die Übertragungsfunktion dadurch geschätzt wird, dass ein Symbol verwendet wird, das dem Empfänger bekannt ist.

3. Verfahren nach Anspruch 1, **dadurch gekennzeichnet, dass** die Mehrzahl von Symbolen gemäß der DVB-T2-Variante des Alamouti-Schemas erzeugt werden kann.

4. Verfahren nach Anspruch 1, **dadurch gekennzeichnet, dass** die geschätzte Übertragungsfunktion im Frequenz- und Zeitbereich gefiltert wird, um die Rauscheffekte des zumindest einen Übertragungskanals zu reduzieren.

5. Verfahren nach Anspruch 1, **dadurch gekennzeichnet, dass** das zumindest eine Signal zwei Komponenten umfasst, die durch einen ersten und einen zweiten Übertragungskanal empfangen wurden, und dass die Übertragungsfunktion ($\hat{H}_0$, $\hat{H}_1$), die jeweils auf den zwei verschiedenen Kanälen geschätzt wird, gegeben ist durch:

$$\hat{H}_0 = \frac{1}{|\hat{s}_{2k}|^2 + |\hat{s}_{2k+1}|^2} (R_0\,\hat{s}^*_{2k} + R_1\hat{s}^*_{2k+1})$$

$$\hat{H}_1 = \frac{1}{|\hat{s}_{2k}|^2 + |\hat{s}_{2k+1}|^2} (-R_0\hat{s}_{2k+1} + R_1\hat{s}_{2k})$$

wobei $R_0$ eine erste Signalkomponente ist, die durch den ersten Übertragungskanal empfangen wurde, $R_1$ eine zweite Signalkomponente ist, die durch den zweiten Übertragungskanal empfangen wurde, und $\hat{s}_{2k}$ und $\hat{s}_{2k+1}$ Schätzungen des Signals sind, das auf zwei aufeinanderfolgenden Trägern (k,k+1) übertragen wird.

6. Verfahren nach Anspruch 5, **dadurch gekennzeichnet, dass** das Verfahren eine iterative Prozedur zum Reduzieren des Fehler in der Schätzung der Übertragungsfunktionen umfasst, wobei die iterative Prozedur endet, wenn der Fehler unter einen vorgegebenen Schwellwert fällt.

7. Verfahren nach Anspruch 6, **dadurch gekennzeichnet, dass** die Übertragungsfunktion ($\hat{H}_0,\hat{H}_1$), die jeweils auf den zwei verschiedenen Kanälen geschätzt wird, gegeben ist durch:

$$\hat{H}_0 = \frac{1}{|\hat{s}_{2k}|^2 + |\hat{s}_{2k+1}|^2} (R_0'\,\hat{s}^*_{2k} + R_1'\,\hat{s}_{2k+1})$$

$$\hat{H}_1 = \frac{1}{|\hat{s}_{2k}|^2 + |\hat{s}_{2k+1}|^2} (R_0'\,\hat{s}^*_{2k+1} - R_1'\,\hat{s}_{2k})$$

wobei $R_0'$ eine erste Signalkomponente ist, die durch den ersten Übertragungskanal empfangen wurde, und $R_1'$ eine zweite Signalkomponente ist, die durch den zweiten Übertragungskanal empfangen wurde, wobei beide einen Teil einer Information über den Fehler umfassen.

8. Verfahren nach Anspruch 1, **dadurch gekennzeichnet, dass** die numerische Modulation vom Typ QAM ist.

9. Decoder, der angepasst ist ein numerisches, codiertes Frequenz-Multiplex-Signal nach einem der Ansprüche 1 bis 8 zu decodieren.

10. Empfänger, der einen Decoder nach Anspruch 9 umfasst.

**Revendications**

1. Procédé de réception de signaux numériques à multiplexage par répartition en fréquences codées, ledit procédé comprenant les étapes consistant à :

- recevoir, par l'intermédiaire d'un récepteur (R), au moins un signal numérique à multiplexage par répartition en fréquences codées, ledit au moins un signal comprenant une pluralité de symboles codés selon une modulation numérique et transmis à des instants qui sont normalisés par rapport à la durée d'un symbole ;
- estimer une fonction de transfert d'au moins une voie de transmission par l'intermédiaire de laquelle ledit au moins un signal numérique est reçu, dans lequel, pour démoduler ledit au moins un signal reçu à un instant donné, ladite fonction de transfert estimée à l'instant précédent est utilisée, **caractérisé en ce que**, si ledit récepteur reconnaît un mauvais décodage d'un mot de code, en particulier en décodant les codes LDPC, ladite fonction de transfert ne sera mise à jour que pour les porteuses qui portent des bits appartenant aux mots de code correctement décodés.

2. Procédé selon la revendication 1, **caractérisé en ce que**, si la fonction de transfert estimée à l'instant précédent est indisponible, ladite fonction de transfert sera estimée au moyen d'un symbole qui est connu dudit récepteur.

3. Procédé selon la revendication 1, **caractérisé en ce que** ladite pluralité de symboles peut être générée selon la variante DVB-T2 du système d'Alamouti.

4. Procédé selon la revendication 1, **caractérisé en ce que** ladite fonction de transfert estimée est filtrée dans les domaines temporel et fréquentiel afin de réduire les effets de bruit de ladite au moins une voie de transmission.

5. Procédé selon la revendication 1, **caractérisé en ce que** ledit au moins un signal comprend deux composantes reçues par l'intermédiaire d'une première et d'une deuxième voies de transmission, et **en ce que** la fonction de transfert ($\hat{H}_0$, $\hat{H}_1$) respectivement estimée sur lesdites deux voies distinctes est donnée par :

$$\hat{H}_0 = \frac{1}{\left|\hat{s}_{2k}\right|^2 + \left|\hat{s}_{2k+1}\right|^2}\left(R_0\hat{s}_{2k}^* + R_1\hat{s}_{2k+1}^*\right)$$

$$\hat{H}_1 = \frac{1}{\left|\hat{s}_{2k}\right|^2 + \left|\hat{s}_{2k+1}\right|^2}\left(-R_0\hat{s}_{2k+1} + R_1\hat{s}_{2k}\right)$$

où $R_0$ est une première composante de signal reçue par l'intermédiaire de ladite première voie de transmission, $R_1$ est une deuxième composante de signal reçue par l'intermédiaire de ladite deuxième voie de transmission, et $\hat{s}_{2k}$ et $\hat{s}_{2k+1}$ sont des estimations du signal transmis au niveau de deux porteuses consécutives (k,k+1).

6. Procédé selon la revendication 5, **caractérisé en ce qu'**il comprend un protocole itératif pour réduire l'erreur dans l'estimation desdites fonctions de transfert, ledit protocole itératif se terminant lorsque l'erreur passe en dessous d'un seuil prédéterminé.

7. Procédé selon la revendication 6, **caractérisé en ce que** la fonction de transfert ($\hat{H}_0$, $\hat{H}_1$) respectivement estimée sur lesdites deux voies distinctes est donnée par :

$$\hat{H}_0 = \frac{1}{\left|\hat{s}_{2k}\right|^2 + \left|\hat{s}_{2k+1}\right|^2}\left(R'_0\hat{s}_{2k}^* + R'_1\hat{s}_{2k+1}^*\right)$$

$$\hat{H}_1 = \frac{1}{\left|\hat{s}_{2k}\right|^2 + \left|\hat{s}_{2k+1}\right|^2}\left(R'_0\hat{s}_{2k+1}^* - R'_1\hat{s}_{2k}\right)$$

où $R'_0$ est une première composante de signal reçue par l'intermédiaire de ladite première voie de transmission, et $R'_1$ est une deuxième composante de signal reçue par l'intermédiaire de ladite deuxième voie de transmission, toutes deux contenant une information à propos de ladite erreur.

8. Procédé selon la revendication 1, **caractérisé en ce que** ladite modulation numérique est du type QAM.

9. Décodeur conçu pour décoder un signal numérique à multiplexage par répartition en fréquences codées selon l'une quelconque des revendications 1 à 8.

10. Récepteur comprenant un décodeur selon la revendication 9.

Q

A

Φ

I

**Fig. 1**

$H$

$H(n,k)$   $H(n,k+1)$   $H(n,k+2)$

$B$

$f$

**Fig. 2**

pilot carriers

frequency (k)

time

$(n)$

**Fig. 3**

**Fig. 4**

**Fig. 5**

Fig. 6a

Fig. 6b

**Fig. 7**

## REFERENCES CITED IN THE DESCRIPTION

**Patent documents cited in the description**

- IT TO950258 A

- EP 0838928 A

**Non-patent literature cited in the description**

- **S.B. WEINSTEIN ; P.M. EBERT.** Data Transmission by Frequency-Division Multiplexing using the Discrete Fourier Transform. *IEEE Transactions on Communications,* October 1971, vol. COM-19 (5), 628-634
- **SIAVASH M. ALAMOUTI.** A Simple Transmit Diversity Technique for- Wireless Communications. *IEEE Journal on Selected Areas in Communications,* October 1998, vol. 16 (8), 1451-1458
- **V. MIGNONE ; A. MORELLO.** CD3-OFDM: a novel demodulation scheme for fixed and mobile receivers. *IEEE Transactions on Communications,* September 1996, vol. 44 (9

- **SIAVASH M. ALAMOUTI.** A Simple Transmit Diversity Technique for Wireless Communications. *IEEE Journal On Selected Areas In Communications,* October 1998, vol. 16 (8), 1451-1458
- **ALAMOUTI ; J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436